# DEMANDE DE BREVET EUROPEEN

(11) **EP 1 013 619 A1**
(43) Date de publication de la demande: **28.06.2000**
(21) Numéro de dépôt: 98124370.2
(22) Date de dépôt: 22.12.1998
(51) Int. Cl.: C03C 3/087, C03C 4/02, C03C 4/08, C03C 17/245, C03C 17/34

(54) **Substrat en verre coloré portant un revêtement**

(71) Demandeur: GLAVERBEL, 1170 Bruxelles (BE)
(72) Inventeur: Hecq, André, 6120 Nalinnes (BE); Tixhon, Eric, 4340 Awans (BE); Coster, Dominique, 5032 Corroy-le-Chateau (BE)
(74) Mandataire: Vandenberghen, Lucienne

(57) **Abrégé**

La présente invention concerne un vitrage comprenant: un substrat en verre coloré sodo-calcique composé de constituants principaux formateurs de verre et d'agents colorants, qui présente une sélectivité (TL/TE) d'au moins 1.1, mesurée avec l'illuminant C pour une épaisseur de verre de 4 mm, et un revêtement déposé sur le substrat en verre coloré.

Le revêtement est un revêtement qui procure au vitrage revêtu une sélectivité augmentée par rapport à la sélectivité du verre coloré non revêtu.

Un tel vitrage est particulièrement utilisé pour les véhicules du type automobile ou train, ou encore pour des bâtiments.

## Description

La présente invention concerne un vitrage comprenant:
- un substrat en verre coloré sodo-calcique composé de constituants principaux formateurs de verre et d'agents colorants,
- un revêtement déposé sur le substrat en verre coloré.

L'expression "verre sodo-calcique" est utilisée ici dans le sens large et concerne tout verre qui confient les constituants suivants (pourcentages en poids):
- SiO₂: 60 à 75 %
- Na₂O: 10 à 20 %
- CaO: 0 à 16 %
- K₂O: 0 à 10 %
- MgO: 0 à 10 %
- Al₂O₃: 0 à 5 %
- BaO: 0 à 2 %
- BaO + CaO + MgO: 10 à 20 %
- K₂O + Na₂O: 10 à 20 %.

Ce type de verre trouve un très large usage dans le domaine des vitrages pour l'automobile ou le bâtiment par exemple. On le fabrique couramment sous forme de ruban par le procédé de flottage. Un tel ruban peut être découpé sous forme de feuilles qui peuvent ensuite être bombées ou subir un traitement de renforcement des propriétés mécaniques, par exemple, une trempe thermique.

Lorsqu'on parle des propriétés optiques d'une feuille de verre, il est en général nécessaire de rapporter ces propriétés à un illuminant standard. Dans la présente description, on utilise 2 illuminants standards: l'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant représente la lumière émise par des phares de voiture et est surtout destiné à évaluer les propriétés optiques des vitrages destinés à l'automobile.

Le "facteur de transmission lumineuse" (TL) est le pourcentage de flux lumineux incident transmis, dans le domaine visible, entre 380 et 780nm, au travers d'un substrat.

Le "facteur de réflexion lumineuse" (RL) est le pourcentage de flux lumineux incident réfléchi par un substrat.

Le "facteur de transmission dans l'ultraviolet" (TUV4) est le pourcentage total de transmission dans l'ultraviolet, entre 290 nm et 380 nm, pour un verre de 4 mm.

Le "facteur de transmission énergétique" (TE) est le pourcentage total du rayonnement énergétique incident directement transmis au travers d'un substrat, entre les longueurs d'onde 300 et 2500 nm.

Le "facteur solaire" (FS) est la somme de l'énergie totale directement transmise au travers d'un substrat (TE) et de l'énergie qui est absorbée (AE) et re-rayonnée sur la face opposée à la source d'énergie rapportée au rayonnement énergétique total atteignant le substrat.

La "sélectivité" d'un substrat revêtu représente la balance entre le facteur de transmission lumineuse et le facteur de transmission énergétique. Il peut être défini comme étant le rapport entre le facteur de transmission lumineuse et le fadeur solaire (TL/FS), qui est surtout utilisé dans le cas d'un vitrage de bâtiment. Il peut aussi être défini comme étant le rapport entre le facteur de transmission lumineuse et le facteur de transmission énergétique (TL/TE), surtout dans le cas de vitrages pour véhicules pour lesquels on considère que l'énergie qui est absorbée et rerayonnée est négligeable quand le véhicule est en mouvement

La "longueur d'onde dominante" (λ_{D}) est le pic de longueur d'onde dans la gamme transmise ou réfléchie par le substrat revêtu.

La "pureté" (P) de la couleur du substrat se rapporte à la pureté d'excitation mesurée à l'aide de l'Illuminant C. Elle est définie selon une échelle linéaire dans laquelle une source définie de lumière blanche a une pureté de 0 et la couleur pure a une pureté de 100%. La pureté d'un substrat revêtu est mesurée du côté opposé à la face revêtue.

L'"émissivité" (ε) est le rapport de l'énergie émise par une surface donnée à une température donnée sur celle d'un radiateur parfait (corps noir ayant une émissivité de 1,0) à la même température.

Du point de vue technique, il est désirable que, dans des conditions d'ensoleillement, le vitrage ne laisse pas passer une trop grande proportion du rayonnement solaire incident total afin que l'intérieur du véhicule ou du bâtiment ne soit pas surchauffé.

Un des objets de la présente invention est d'obtenir un vitrage qui présente un niveau élevé de protection solaire allié à une haute sélectivité, et qui puisse être obtenu dans des conditions de fabrication industrielles classiques.

On a découvert que cet objectif, ainsi que d'autres, peut être atteint par un vitrage qui combine un substrat en verre coloré sélectif, qui présente une sélectivité (TL/TE) d'au moins 1.1, mesurée avec l'illuminant C pour une épaisseur de verre de 4 mm, et un revêtement qui procure au vitrage revêtu une sélectivité augmentée par rapport à la sélectivité du verre coloré non revêtu. Dans le cadre de la présente invention, le vitrage comprend un substrat en verre coloré.

La présente invention permet d'obtenir un vitrage présentant une haute sélectivité tout en évitant les difficultés qui sont souvent associés à la fabrication industrielle de verres colorés à haute sélectivité. En outre, la présente invention permet une plus grande souplesse de fabrication en ce sens qu'il est généralement plus aisé de modifier les propriétés du vitrage en changeant de revêtement plutôt qu'en modifiant la composition de verre coloré.

De préférence, le verre coloré est choisi de telle sorte que sa sélectivité ait une valeur d'au moins 1.3. Ceci contribue à obtenir aisément un vitrage revêtu à haute sélectivité.

De préférence cependant la sélectivité du verre coloré non revêtu est inférieure ou égale à 2. Il est possible que des verres colorés non revêtus aient une sélectivité supérieure à 2 cependant ceux-ci sont généralement difficiles à obtenir dans des conditions industrielles classiques de fabrication pour deux raisons: une teneur en fer élevée nécessaire pour obtenir la haute sélectivité rend le verre difficile à fondre ce qui requiert alors l'utilisation de fours électriques particuliers, de petite capacité et, par ailleurs, un rapport rédox élevé de FeO/Fe total favorable à l'obtention d'une haute sélectivité requiert de modifier les conditions d'affinage, ce qui rend l'élaboration du verre dans des conditions industrielles de fabrication problématiques. C'est pourquoi la sélectivité du verre coloré non revêtu est de préférence inférieure ou égale à 2.

De préférence, le verre coloré est un verre dont la transmission entre les longueurs d'onde 1000 et 1200 nm, pour une épaisseur de 4mm, est plus faible d'au moins 5 points (exprimés en %: rapport entre le rayonnement transmis et le rayonnement incident) par rapport à la transmission entre les longueurs d'onde 500 et 600 nm. Un verre coloré répondant à cette condition est sélectif et peut être notamment vert, bleu ou gris.

Le verre coloré peut être un verre coloré gris foncé sodo-calcique composé de constituants principaux, formateurs de verre et d'agents colorants, dans lequel les éléments fer, sélénium, cobalt, chrome sont présents en tant qu'agents colorants, en quantité correspondant aux proportions suivantes (exprimées en pourcentage en poids du verre sous la forme indiquée)
- Fe₂O₃: 0,75 à 1,8%
- Co: 0,0040 à 0,0180%
- Se: 0,0003 à 0,0040 %
- Cr₂O₃: 0,0010 à 0,0100 %
et les proportions des agents colorants sont telles que le verre présente une transmission énergétique totale, mesurée pour une épaisseur de 4 mm (TE4) comprise entre 15 et 40%, une sélectivité (TLA/TE4) d'au moins 1,2 et une pureté d'excitation (P) ne dépassant pas 10%.

En variante, le verre coloré est un verre sodo-calcique coloré vert, qui comprend les pourcentages en poids en agents colorants suivants, la quantité totale de fer étant exprimée sous forme de Fe₂O₃:
- Fe₂O₃: 0.7 à 1.3 %
- FeO: 0.18 à 0.27 %
- Co: 0 à 0.0040 %
- V₂O₅: 0.0050 à 0.1 %,
et qui présente sous illuminant A et pour une épaisseur de verre de 4 mm, une transmission lumineuse (TLA4) comprise entre 40 et 70 %, une sélectivité (TLA/TE4) supérieure ou égale à 1.50.

Selon une autre forme préférée de réalisation de l'invention, le verre coloré est un verre vert-gris sodo-calcique composé de constituants principaux formateurs de verre et d'agents colorants, qui contient moins de 0,4% en poids de FeO, de 0.9 à 1.8% de Fe₂O₃, qui possède une pureté d'excitation de plus de 5% et présente sous illuminant A et pour une épaisseur de verre de 4 mm, une transmission lumineuse (TLA4) supérieure à 30%, une sélectivité TLA/TE) supérieure à 1,55 et une transmission du rayonnement ultraviolet (TUV4) inférieure à 10%.

En variante, le verre coloré est un verre sodo-calcique coloré composé de constituants principaux formateurs de verre et d'agents colorants, qui contient de 0.40 à 0.52 % en poids de FeO, présente sous illuminant A et pour une épaisseur de verre de 4 mm une transmission lumineuse (TLA4) inférieure à 70 %, une sélectivité (TLA/TE4) supérieure à 1.65 et une transmission du rayonnement ultraviolet (TUV4) inférieure à 8 %.

Un aspect esthétique particulièrement plaisant allié à une haute sélectivité peut encore s'obtenir avec un verre coloré sodo-calcique à nuance bleue composé de constituants principaux formateurs de verre dont plus de 2% d'oxyde de magnésium, et d'agents colorants, qui contient plus de 1,1% en poids de Fe2O3, moins de 0,53% en poids de FeO, moins de 0.13% d'oxyde de manganèse et possède une transmission lumineuse (TLA4) comprise entre 15% et 70%, une sélectivité (SE4) supérieure à 1,2 et présente une longueur d'onde domonante (λ_{D}) et une pureté (P) telles qu'elles se situent dans un diagramme trichromatique CIE à l'intérieur d'un triangle dont les sommets sont définis par le point représentant l'illuminant C et les points dont les coordonnées (λ_{D},P) sont respectivement (490,19) et (476,49).

Afin d'obtenir une valeur élevée de sélectivité et/ou une amélioration importante de la sélectivité par rapport au verre coloré non revêtu de départ, la sélectivité est de préférence augmentée d'au moins 3% par rapport à la sélectivité du verre coloré non revêtu. De préférence, on augmente la sélectivité d'au moins 10% par rapport à la sélectivité du verre coloré non revêtu.

On connaît diverses techniques pour former des revêtements sur un substrat en matière vitreuse, y compris la pyrolyse et la pulvérisation cathodique. De préférence, le revêtement est un revêtement déposé par pyrolyse. La pyrolyse présente généralement l'avantage de former un revêtement dur qui ne nécessite pas de couche de protection. Les revêtements formés par pyrolyse présentent des propriétés durables de résistance à l'abrasion et à la corrosion. On pense que ceci est dû en particulier au fait que le processus comprend le dépôt de précurseur sur un substrat qui est chaud. De plus, la pyrolyse est généralement moins coûteuse que d'autres procédés de revêtement tels que la pulvérisation cathodique, particulièrement en termes d'investissement en équipements. En effet, le dépôt par pyrolyse peut s'effectuer pendant la fabrication du verre en continu, sur le ruban de verre chaud fraîchement formé. Par contre, un dépôt tel que par pulvérisation cathodique s'effectue sous vide hors ligne de fabrication, sur du verre froid préalablement découpé en plateaux. En outre, le dépôt de revêtement par des procédés autres que la pyrolyse, par exemple par pulvérisation cathodique, conduit à des produits présentant des propriétés différentes en particulier une moindre résistance à l'abrasion et parfois des propriétés optiques (indice de réfraction) différentes.

Le revêtement déposé par pyrolyse peut être appliqué sur le substrat par dépôt chimique en phase vapeur ou au départ d'un précurseur liquide. De préférence le revêtement (ou les couches de revêtement) est appliqué sur le substrat par dépôt chimique en phase vapeur. Le dépôt chimique en phase vapeur est particulièrement préféré parce qu'il tend à produire des revêtements d'épaisseur et de composition régulières, l'uniformité du produit étant particulièrement importante lorsque les vitrages doivent être utilisés sur des grandes surfaces. Avec l'utilisation de matières réactives liquides, on ne peut pas agir sur le processus de vaporisation ce qui le rend aléatoire. En outre, le dépôt chimique en phase vapeur est plus économique au point de vue de l'utilisation des matières premières, ce qui conduit à un moindre gaspillage.

De préférence, le revêtement est tel que sa transmission, entre les longueurs d'onde 500 et 600 nm, sur verre clair d'épaisseur 4mm est plus élevée d'au moins 3 points (exprimés en pourcent: rapport entre le rayonnement transmis et le rayonnement incident) par rapport à la transmission entre les longueurs d'onde 1000 et 1200 nm.

Un tel revêtement permet déjà d'obtenir un vitrage sélectif avec du verre clair.

Le revêtement peut être une couche absorbante comprenant un empilage à base de nitrure de titane, éventuellement oxydé, mais, ainsi qu'on le préfère, le revêtement est choisi parmi les suivants:
- revêtement déposé par pyrolyse contenant de l'étain et de l'antimoine dans un rapport molaire compris entre 0.01 et 0.5,
- revêtement d'oxyde déposé par pyrolyse comprenant une couche conductrice ou semi-conductrice d'épaisseur 15 à 500 nm formée d'un matériau comprenant un oxyde métallique contenant un dopant en un rapport de 5 à 100 moles par 100 moles d'oxyde métallique, l'oxyde métallique étant sélectionné parmi un ou plusieurs des suivants: oxyde de tungstène (WO3), trioxyde de molybdène (MoO₃), pentoxide de niobium (Nb₂O₅), pentoxyde de tantale (Ta₂O₅), pentoxyde de vanadium (V₂O₅) et dioxyde de vanadium (VO₂).
- revêtement déposé par pyrolyse qui comprend un empilage interférentiel antireflet qui comprend depuis le verre un empilage de matériaux d'indice de réfraction alternativement haut et bas
- revêtement déposé par pyrolyse qui comprend une couche dont l'émissivité est inférieure à 0.3, en particulier une couche déposée par pyrolyse à base d'oxyde d'étain dopé au fluor.

On a découvert que de tels revêtements conviennent particulièrement pour augmenter la sélectivité du vitrage vis à vis de la sélectivité du verre coloré non revêtu.

Des revêtements d'oxyde déposé par pyrolyse contenant de l'étain et de l'antimoine dans un rapport molaire compris entre 0.01 et 0.5 sont en particulier décrits dans les demandes de brevet GB 2 302 102 et GB 2 302 101, dont le contenu est incorporé dans la présente demande par référence. De tels revêtements procurent une augmentation de sélectivité allant jusqu'à 20%.

Des revêtements déposés par pyrolyse peuvent contenir une couche conductrice ou semi-conductrice d'épaisseur 15 à 500 nm formée d'un matériau comprenant un oxyde métallique contenant un dopant en un rapport de 5 à 100 moles par 100 moles d'oxyde métallique, l'oxyde métallique étant sélectionné parmi un ou plusieurs des suivants :oxyde de tungstène (WO3), trioxyde de molybdène (MoO₃), pentoxide de niobium (Nb₂O₅), pentoxyde de tantale (Ta₂O₅), pentoxyde de vanadium (V₂O₅) et dioxyde de vanadium (VO₂). De tels revêtements procurent une augmentation de sélectivité allant jusqu'à 30%. Ils permettent en outre d'augmenter considérablement la sélectivité en termes de rapport TL/FS: la sélectivité du vitrage peut être de plus de 30% supérieure à la sélectivité du verre coloré non revêtu.

Le revêtement peut comprendre une couche dont l'émissivité est inférieure à 0.3. Une couche d'oxyde contenant de l'étain et de l'antimoine dans un rapport molaire compris entre 0.01 et 0.5 décrit ci-dessus peut posséder cette propriété. En variante, la couche à basse émissivité peut être une couche à base d'oxyde d'étain dopé au fluor. Une couche dont l'émissivité est faible permet d'augmenter la sélectivité en termes de rapport TL/FS, car l''émissivité intervient dans la valeur du facteur solaire: une faible émissivité permet de diminuer le facteur solaire du vitrage et donc d'augmenter la sélectivité calculée en termes de rapport TL/FS.

Le revêtement peut comprendre une sous-couche entre le substrat et le revêtement déposé par pyrolyse. Cette sous-couche peut aussi être déposée par pyrolyse. Le rôle d'une telle sous-couche peut être de réduire le voile, en empêchant la migration des ions sodium depuis le verre, par diffusion ou par toute autre manière, vers la couche de revêtement que ce soit pendant la formation de cette couche supérieure ou pendant un traitement ultérieur à haute température. Par exemple, une telle sous-couche peut être formée d'un oxyde de silicium ayant une épaisseur géométrique d'environ 100 nm. Une telle sous-couche n'est en général pas nécessaire pour des vitrages à faible facteur de transmission lumineuse car le voile n'y apparaît pas de manière significative. Un autre rôle d'une sous-couche, en variante ou en complément du rôle exposé ci-dessus, peut être de former un empilage "anti-réfléchissant", par exemple au moyen d'une sous-couche oxydée aluminium/vanadium, comme décrit dans la demande de brevet GB 2 248 243.

Dans des formes préférées de réalisation de l'invention, le revêtement est un revêtement déposé par pyrolyse, de préférence déposé en phase vapeur, qui contient de l'étain et de l'antimoine dans un rapport molaire compris entre 0.04 et 0.16. On a découvert que des revêtements comprenant de telles proportions d'étain et d'antimoine permettent de réaliser des vitrages dont les propriétés de haute sélectivité sont particulièrement avantageuses: l'augmentation de sélectivité du vitrage revêtu vis à vis du verre coloré non revêtu est généralement d'au moins 7% et souvent de plus de 10%.

De préférence, le revêtement d'oxyde déposé par pyrolyse, qui contient de l'étain et de l'antimoine dans un rapport molaire compris entre 0.01 et 0.5, a une épaisseur comprise entre 250 et 500nm. De telles épaisseurs peuvent être obtenues dans des conditions industrielles classiques de fabrication, tandis que des revêtements de faible ou de forte épaisseur sont difficiles à réaliser en pratique, et ces épaisseurs permettent d'obtenir des augmentations de sélectivité, par rapport au verre coloré seul sans revêtement, qui peuvent être très importantes, par exemple de plus de 20%.

Pour certaines applications, il est nécessaire que le substrat revêtu subisse un traitement ultérieur pendant lequel il est bombé et/ou traité thermiquement, en particulier recuit ou trempé. Ceci est particulièrement le cas de vitrages pour véhicules. Le vitrage selon l'invention supporte ce traitement, spécialement si le revêtement est déposé par pyrolyse. Dans ce cas, ses propriétés ne sont pas modifiées par le traitement ultérieur. En variante, s'il s'agit d'un revêtement déposé par pulvérisation cathodique, il suffit que celui-ci comporte une ou plusieurs couches dites "sacrificielles" permettant de préserver la ou les couches actives pendant le traitement ultérieur.

Le facteur de réflexion lumineuse (RL) du vitrage est généralement faible ce qui est particulièrement avantageux pour des vitrages de véhicules. De préférence le facteur de réflexion lumineuse (RL) du vitrage est inférieur à 13%.

De préférence, l'émissivité du vitrage est inférieure à 0.2. L'émissivité intervient dans la valeur du facteur solaire: une faible émissivité permet de diminuer le fadeur solaire du vitrage et donc d'augmenter la sélectivité calculée en termes de rapport TL/FS.

La sélectivité du substrat revêtu peut être très élevée et de préférence elle est supérieure à 2. Un vitrage à sélectivité aussi élevée est particulièrement souhaité pour des raisons de confort dans le domaine des vitrages automobiles.

On a découvert que le vitrage selon l'invention peut présenter une longueur d'onde dominante en transmission dans le spectre visible du substrat revêtu qui est inférieure à la longueur d'onde dominante en transmission du substrat non revêtu. Ceci est particulièrement avantageux quand le verre coloré a une couleur en transmission qui est peu appréciée esthétiquement: un exemple typique est le verre vert, dont la longueur d'onde dominante en transmission est comprise entre 490 et 550nm, et plus particulièrement entre 490 et 520 nm. Un tel verre est obtenu par ajout de fer dans la composition du verre. Le fer permet d'obtenir des sélectivités très élevées mais l'augmentation de la quantité de fer dans la composition, associée à une augmentation de la sélectivité, augmente aussi l'aspect vert en transmission, qui est généralement peu apprécié pour des raisons esthétiques. La présente invention permet de pallier cet inconvénient en fournissant un vitrage dont la longueur d'onde dominante en transmission est inférieure à la longueur d'onde dominante en transmission du verre coloré sans revêtement donc un verre qui aura un aspect moins vert, plus bleuté que le verre coloré de départ, ce qui est considéré comme plus souhaitable au point de vue esthétique. On a découvert que cet avantage est particulièrement réalisé quand le revêtement est un revêtement déposé par pyrolyse contenant de l'étain et de l'antimoine dans un rapport molaire compris entre 0.01 et 0.5, et plus particulièrement un revêtement déposé par pyrolyse, de préférence déposé en phase vapeur, qui confient de l'étain et de l'antimoine dans un rapport molaire compris entre 0.04 et 0.16, de préférence entre 0.08 et 0.14. Un tel vitrage présente en outre l'avantage d'avoir des propriétés énergétiques avantageuses car un tel revêtement réfléchit surtout les longueurs d'onde situées dans la fin de l'infrarouge tandis que le verre coloré absorbe surtout au début de l'infrarouge: il y a donc un effet complémentaire très favorable à la sélectivité de l'ensemble.

Dès lors, et de préférence, la longueur d'onde dominante en transmission dans le spectre visible du substrat revêtu est inférieure à 500 nm, de préférence inférieure ou égale à 495nm, de préférence associé à une pureté inférieure à 20%.

Le vitrage selon l'invention convient particulièrement en tant que vitrage pour véhicule en particulier il peut être utilisé en tant que vitrage pour automobile ou train.

L'invention sera maintenant décrite plus en détails en se référant aux exemples non limitatifs suivants.

Les propriétés des différents types de verre coloré sont présentées dans le tableau 1 ci-dessous. Les propriétés sont mesurées sur des échantillons de verre de 4 mm d'épaisseur. Pour certains verres, les propriétés sont en outre mentionnées pour une épaisseur de 6 mm. Les initiales dans les en-têtes de ce tableau et des autres tableaux suivants (TLA, TUV4, TLC, TE etc.) ont les significations décrites ci-dessus. Le tableau 1 mentionne en outre les principaux agents colorants présents dans les différents verres colorés.

**Tableau 1**

| Type de verre épaisseur | vert | | vert foncé | | vert très foncé | | gris 1 | gris 2 | bleu 1 | bleu 2 |
|---|---|---|---|---|---|---|---|---|---|---|
| | 4mm | 6mm | 4mm | 6mm | 4mm | 6mm | 4mm | 4mm | 4mm | 4mm |
| Long. d'onde (illC) (nm) trans. | 504 | 504 | 498 | 499 | 496 | 496 | 494 | 495 | 489 | 486 |
| Pureté (ill C) (%) | 3,5 | 5,2 | 7,7 | 11 | 11,2 | 15,8 | 5,8 | 5 | 16,8 | 24,3 |
| TLA (%) | 65,3 | 55,3 | 45,3 | 32,2 | 32,2 | 19,4 | 35,4 | 48,1 | 42.7 | 36.94 |
| TUV4 | | | <10% | | 2.9 | | | | | |
| TLC(%) | 67 | 57,42 | 47,5 | 34,5 | 34,3 | 21,3 | 36,5 | 49,4 | 45.3 | 39.9 |
| TE CIE (%) | 38,6 | 28,4 | 25,2 | 15,7 | 17,7 | 9,5 | 26,3 | 34,6 | 26 | 21.4 |
| FS | 52,8 | 45,2 | 42,9 | 35,8 | 37,3 | 31,3 | 43,7 | 49,9 | 43.5 | 40.1 |
| TLC/TE | 1,74 | 2,02 | 1,88 | 2.20 | 1,94 | 2,24 | 1,39 | 1,43 | 1.74 | 1.86 |
| TLC/FS | 1,27 | 1,27 | 1,11 | 0,96 | 0,92 | 0,68 | 0,84 | 0,99 | 1.04 | 1 |

| Colorants: | | | | | | | | | | |
|---|---|---|---|---|---|---|---|---|---|---|
| Fe2O3 (%) | 0,94 | | 1,32 | | 1,55 | | 1,4 | 1,13 | 1.26 | 1.24 |
| (FeO calc%) | 0.24 | | <0.4 | | 0.44 | | | | | |
| Co (ppm) | 7 | | 43 | | 80 | | 94 | 61 | 67 | 81 |
| V2O5 (ppm) | 153 | | 238 | | 429 | | imp. | imp. | 7 | Imp. |
| Cr2O3(ppm) | imp. | | 133 | | 214 | | 17 | 23 | 77 | imp. |
| Se (ppm) | imp. | | imp. | | imp. | | 8 | imp. | imp. | Imp. |

| | | | | | | | | | | |
|---|---|---|---|---|---|---|---|---|---|---|
| imp. = impuretés | | | | | | | | | | |

### EXEMPLES 1 à 5, exemples comparatifs 1 et 2

Du verre flotté coloré "vert" tel que défini dans le tableau 1 avançant le long d'une cuve de flottage est revêtu par pyrolyse CVD ("Chemical Vapor Deposition" = dépôt chimique en phase vapeur) au moyen d'un réactif comprenant un mélange de MBTC (monobutyl trichloro étain) en tant que source d'étain et de SbCl3 en tant que source d'antimoine. Le mélange réactif est vaporisé dans un courant d'air anhydre à environ 200°C. La vaporisation est facilitée par la nébulisation de ces réactifs dans le gaz porteur. De la vapeur d'eau surchauffée à environ 200°C est ensuite introduite.

Le processus de revêtement est poursuivi jusqu'à ce que l'épaisseur géométrique du revêtement d'oxyde d'étain/antimoine surmontant le substrat soit environ 280 nm (exemples 1 à 3) ou 440 nm (exemples 4 et 5). Le rapport molaire Sb/Sn mesuré par fluorescence X dans le revêtement est mentionné dans le tableau, ainsi que les épaisseurs mesurées elles aussi par fluorescence X.

A titre d'exemple comparatif 1, du verre similaire est revêtu d'une couche déposée par pyrolyse absorbante formée d'un mélange d'oxydes de Fe, Co et Cr dans les proportions pondérales 26% Fe2O3, 61% Co3O4 et 13% Cr2O3, d'une épaisseur d'environ 45 nm.

A titre d'exemple comparatif 2, du verre similaire est revêtu d'une couche déposée par pyrolyse de 55 nm environ comprenant des oxydes de titane (90% TiO2 en poids) et d'étain (10% SnO2 en poids).

Le tableau 2 montre que, pour les exemples comparatifs, la sélectivité est diminuée par rapport à la sélectivité du verre de départ tandis que la longueur d'onde dominante en transmission et la pureté sont augmentées, ce qui procure un aspect vert encore plus marqué, ce qui est jugé comme défavorable au point de vue esthétique. Par contre, pour les exemples 1 à 5, la sélectivité est nettement augmentée par rapport à la sélectivité du verre coloré seul: jusqu'à 19% d'augmentation. De plus, la longueur d'onde dominante en transmission est inférieure à celle du verre coloré seul, ce qui est favorable au point de vue des propriétés recherchées.

Les valeurs de réflexion lumineuse (RL) et de facteur solaire (FS) sont mesurées du côté revêtu/du côté non revêtu.

**Tableau 2**

| Exemple | Verre vert, 4mm , TL/TE verre seul = 1.74 | | | | | | | | |
|---|---|---|---|---|---|---|---|---|---|
| | TLC | λ_{D} tr | P | TE | FS | RL | TL/TE | ecart | écart % |
| Comparatif 1 | 28,4 | 567 | 13 | 18,8 | 33/36 | 34/17 | 1,51 | -0,23 | -13% |
| Comparatif 2 | 50 | 550 | 5,8 | 29 | 41/44 | 31/19 | 1,72 | -0,02 | -1% |
| 1, 5%Sb/Sn 280nm | 50 | 502 | 4,3 | 24 | 41/37 | 9/7.5 | 2,08 | 0,34 | 20% |
| 2, 9% Sb/Sn 285nm | 42 | 495 | 6,2 | 21 | 38/35 | 8/7. | 2,00 | 0,26 | 15% |
| 3, 13% Sb/Sn 270nm | 37 | 492 | 7,7 | 19 | 37/34 | 7/6. | 1,95 | 0,21 | 12% |
| 4, 12% Sb/Sn 440nm | 27 | 491 | 10 | 13 | 33/28 | 6/6. | 2,08 | 0,34 | 19% |
| 5, 9 % Sb/Sn 445nm | 32 | 491 | 9 | 15,5 | 34/29 | 7/6. | 2,06 | 0,32 | 19% |

En variante, voici les résultats sur un verre coloré identique dont l'épaisseur est de 6mm au lieu de 4mm:

**Tableau 3**

| | Verre vert, 6 mm , TL/TE verre seul = 2.02 | | | | | | | | |
|---|---|---|---|---|---|---|---|---|---|
| | TLC | λ_{D} tr | P | TE | FS | RL | TL/TE | ecart | écart % |
| Comparatif 1 | 24 | 561 | 13 | 13 | 28/33 | 34/14 | 1,85 | -0,17 | -9% |
| Comparatif 2 | 42,6 | 540 | 6,5 | 20,7 | 35/39 | 31/15 | 2,06 | 0,04 | 2% |
| 1', 5%Sb/Sn 280nm | 43 | 504 | 5,8 | 18,4 | 36/32 | 8.5/7 | 2,34 | 0,32 | 16% |
| 2', 9% Sb/Sn 285nm | 36 | 498 | 7,4 | 15,7 | 34/31 | 7.7/6 | 2,29 | 0,27 | 14% |
| 3,' 13% Sb/Sn 270nm | 32 | 495 | 8,8 | 14 | 33/30 | 7/6. | 2,29 | 0,27 | 13% |
| 4', 12% Sb/Sn 440nm | 23 | 463 | 11,5 | 10 | 31/26 | 6/5. | 2,30 | 0,28 | 14% |
| 5', 9 % Sb/Sn 445nm | 27 | 493 | 10 | 12 | 32/27 | 7/6. | 2,25 | 0,23 | 11% |

### EXEMPLES 6 à 10

Dans les exemples 6 à 10, on suit le processus des exemples 1 à 5 mais avec du verre vert foncé tel que défini dans le tableau 1, de 4 mm ou, en variante, de 6mm:

**Tableau 4**

| Exemple | Verre vert, foncé 4mm, TL/TE seul = 1.88 | | | | | | | | |
|---|---|---|---|---|---|---|---|---|---|
| | TLC | λ_{D} tr | P | TE | FS | RL | TL/TE | ecart | écart % |
| 6, 5%Sb/Sn 280nm | 35 | 496 | 9 | 16,5 | 35/31 | 8/6 | 2,12 | 0,24 | 13% |
| 7, 9%Sb/Sn 285nm | 30 | 493 | 11 | 14 | 33/30 | 7/6 | 2,14 | 0,26 | 14% |
| 8, 13% Sb/Sn 270nm | 26 | 491 | 12 | 13 | 32/30 | 7/5 | 2,00 | 0,12 | 6% |
| 9, 12% Sb/Sn 440nm | 19 | 491 | 15 | 9 | 30/25 | 6/5 | 2,11 | 0,23 | 12% |
| 10, 9 % Sb/Sn 445nm | 23 | 491 | 13 | 10,5 | 30/26 | 7/5 | 2,19 | 0,31 | 17% |

**Tableau 5**

| | Verre vert foncé, 6 mm ,TL/TE seul = 2.20 | | | | | | | | |
|---|---|---|---|---|---|---|---|---|---|
| | TLC | λ_{D} tr | P | TE | FS | RL | TL/TE | ecart | écart % |
| 6', 5%Sb/Sn 280nm | 26 | 497 | 12 | 10,5 | 30/26 | 8/5 | 2,48 | 0,28 | 13% |
| 7', 9% Sb/Sn 285nm | 22 | 495 | 14 | 9 | 29/26 | 7/5 | 2,44 | 0,24 | 11% |
| 8,' 13% Sb/Sn 270nm | 19 | 493 | 15 | 8 | 29/26 | 7/5 | 2,38 | 0,18 | 8% |
| 9' 12% Sb/Sn 440nm | 14 | 492 | 18 | 6 | 27/23 | 6/5 | 2,33 | 0,13 | 6% |
| 10', 9 % Sb/Sn 445nm | 16 | 492 | 16 | 6,8 | 28/23 | 7/5 | 2,35 | 0.15 | 7% |

On remarque que la sélectivité est nettement augmentée: de 6 à 17% pour du verre de 4mm, et, de plus, la longueur d'onde dominante en transmission est inférieure à celle du verre coloré sans revêtement.

### EXEMPLES 11 à 15

Dans les exemples 11 à 15 , on suit le processus des exemples 1 à 5 mais avec du verre vert très foncé tel que défini dans le tableau 1, de 4 mm ou, en variante, de 6mm:

**Tableau 6**

| Exemple | Verre vert très foncé 4mm, TL/TE seul = 1.94 | | | | | | | | |
|---|---|---|---|---|---|---|---|---|---|
| | TLC | λ_{D} tr | P | TE | FS | RL | TL/TE | ecart | écart % |
| 11, 5%Sb/Sn 280nm | 25 | 495 | 13 | 11,5 | 31/27 | 8/5 | 2,14 | 0,20 | 10% |
| 12, 9% Sb/Sn 285nm | 21 | 493 | 14 | 10 | 30/27 | 7/5 | 2,08 | 0,14 | 7% |
| 13, 13% Sb/Sn 270nm | 19 | 491 | 16 | 9 | 30/27 | 7/5 | 2,00 | 0,06 | 3% |
| 14, 12% Sb/Sn 440nm | 14 | 491 | 18 | 6,4 | 28/23 | 6/5 | 2,00 | 0,06 | 3% |
| 15, 9 % Sb/Sn 445nm | 16 | 491 | 17 | 7,4 | 28/23 | 7/5 | 2,07 | 0,13 | 6% |

**Tableau 7**

| | Verre vert très foncé, 6 mm ,TL/TE seul = 2.24 | | | | | | | | |
|---|---|---|---|---|---|---|---|---|---|
| | TLC | λ_{D} tr | P | TE | FS | RL | TU/TE | ecart | écart % |
| 11', 5%Sb/Sn 280nm | 16 | 495 | 17 | 6,3 | 27/22 | 8/5 | 2,54 | 0,30 | 13% |
| 12', 9% Sb/Sn 285nm | 13 | 494 | 19 | 5,4 | 27/23 | 7/5 | 2,41 | 0,17 | 7% |
| 13' 13% Sb/Sn 270nm | 12 | 493 | 20 | 4,8 | 27/23 | 7/5 | 2,50 | 0,26 | 12% |
| 14' 12% Sb/Sn 440nm | 8,7 | 492 | 22 | 3,5 | 26/21 | 6/4 | 2,49 | 0,25 | 11% |
| 15', 9 % Sb/Sn 445nm | 10 | 492 | 21 | 4,1 | 26/21 | 7/5 | 2,44 | 0,20 | 9% |

La sélectivité est améliorée et la longueur d'onde dominante en transmission est inférieure à celle du verre coloré non revêtu. On peut noter que le pourcentage d'augmentation de la sélectivité est inférieur au pourcentage d'augmentation obtenu dans les exemples précédents cependant il faut tenir compte de la transmission lumineuse de départ quand on compare les sélectivités: plus la transmission lumineuse de départ est basse plus il est difficile d'augmenter la sélectivité.

### EXEMPLES 16 à 20

Dans les exemples 16 à 20, on suit le processus des exemples 1 à 5 mais avec du verre "bleu 1" tel que défini dans le tableau 1, de 4 mm:

**Tableau 8**

| Exemple | Verre bleu 1, 4mm, TL/TE seul = 1.74 | | | | | | | | |
|---|---|---|---|---|---|---|---|---|---|
| | TLC | λ_{D} tr | P | TE | FS | RL | TL/TE | ecart | écart % |
| 16, 5%Sb/Sn 280nm | 34 | 488 | 15 | 17 | 35/31 | 8/6 | 2,00 | 0,26 | 15% |
| 17, 9% Sb/Sn 285nm | 28 | 487 | 17 | 15 | 34/30 | 8/5 | 1,87 | 0,13 | 7% |
| 18, 13% Sb/Sn 270nm | 25 | 486 | 19 | 13 | 33/30 | 7/5 | 1,92 | 0,18 | 11% |
| 19, 12% Sb/Sn 440nm | 18 | 486 | 21 | 9,3 | 30/25 | 6/5 | 1,94 | 020 | 11% |
| 20, 9 % Sb/Sn 445nm | 22 | 486 | 20 | 11 | 31/26 | 7/5 | 2,00 | 0,26 | 15% |

La sélectivité est nettement augmentée tandis que la longueur d'onde dominante en transmission, située dans le bleu, est légèrement diminuée.

### EXEMPLES 21 à 25

Dans les exemples 21 à 25, on suit le processus des exemples 1 à 5 mais avec du verre "bleu 2" tel que défini dans le tableau 1, de 4 mm:

**Tableau 9**

| Exemple | Verre bleu 2, 4mm, TL/TE seul =1.86 | | | | | | | | |
|---|---|---|---|---|---|---|---|---|---|
| | TLC | λ_{D} tr | P | TE | FS | RL | TL/TE | ecart | écart % |
| 21, 5%Sb/Sn 280nm | 30 | 486 | 21 | 14 | 33/29 | 8/5 | 2,14 | 0,28 | 15% |
| 22, 9% Sb/Sn 285nm | 25 | 484 | 23 | 12 | 32/28 | 7.5/5 | 2,08 | 0,22 | 12% |
| 23, 13% Sb/Sn 270nm | 22 | 484 | 25 | 11 | 31/28 | 7/5 | 2,00 | 0,14 | 8% |
| 24, 12% Sb/Sn 440nm | 16 | 484 | 27 | 8 | 29/24 | 6/5 | 2,00 | 0,14 | 8% |
| 25, 9% Sb/Sn 445nm | 19 | 484 | 26 | 9,2 | 30/25 | 7/5 | 2,07 | 0,21 | 11% |

La sélectivité est nettement augmentée tandis que la longueur d'onde dominante en transmission reste identique ou diminue.

### EXEMPLES 26 et 27

Pour l'exemple 26, le processus de l'exemple 1 est suivi avec du verre "gris 1" tel que défini dans le tableau 1. Pour l'exemple 27, le verre est le verre "gris 2" tel que défini dans le tableau 1.

**Tableau 10**

| Exemple 26 | Verre gris 1, 4mm, TL/TE seul =1.39 | | | | | | | | |
|---|---|---|---|---|---|---|---|---|---|
| Exemple 27 | Verre gris 2, 4mm, TL/TE seul =1.43 | | | | | | | | |
| | TLC | λ_{D} tr | P | TE | FS | RL | TL/TE | écart | écart % |
| 26, 5%Sb/Sn 280nm | 28 | 495 | 6 | 15,9 | 30,3 | 5/7,1 | 1,76 | 0,37 | 27% |
| 27, 5%Sb/Sn 280nm | 37,9 | 496 | 5,2 | 21,3 | 34,6 | 5,7/4,4 | 1,78 | 0,35 | 24% |

La sélectivité est très nettement augmentée par rapport à la sélectivité du verre coloré non revêtu.

### EXEMPLES 28 à 43

Ces exemples sont présentés dans les tableaux 11 et 12. Les verres colorés utilisés sont mentionné dans la deuxième cotonne du tableau. Les verres colorés sont ceux définis dans le tableau 1. De plus, le verre bleu "Azurlite" est utilisé dans les exemples 42 et 43. Ce verre a les propriétés mentionnées dans le tableau 12. Sa teneur en agents colorants est la suivante:
0.41% Fe2O3 avec 0.255 % FeO (Fe2+/Fe total supérieur à 60%),
0.35-0.56% CeO2
0.010% SO3.

Les empilages de couches déposées sont les suivants:
- une sous-couche d'oxyde d'étain de 29nm d'épaisseur puis une couche déposée par pyrolyse à base d'oxyde de tungstène contenant 9.4% de Na de 34nm d'épaisseur, recouverte d'une couche SnO2 de 25nm d'épaisseur.
- une sous-couche d'oxyde d'étain de 16nm puis une couche déposée par pyrolyse à base d'oxyde de tungstène contenant 9.4% de Na de 78nm d'épaisseur, recouverte d'une couche SnO2 de 40nm.
- un empilage "à basse émissivité" comprenant une couche SiOx d'indice de réfraction 1.68 et de 70nm d'épaisseur revêtu d'une couche à basse émissivité (ε=0.15) d'oxyde d'étain SnO2 dopée au Fluor (1 à 2% de fluor) de 320 nm. Pour ce dernier exemple, les valeurs sont mesurées avec la couche en position 2 donc côté verre, afin de bénéficier de l'effet favorable de la couche a basse émissivité sur le facteur solaire. Par contre, pour tous les autres types d'empilages, les valeurs sont mesurées avec la couche en position 1 (côté couche).

### EXEMPLES 44 et 45

Ces exemples sont présentés au tableau 12. Les verres colorés utilisés sont les verres vert très foncé et vert foncé définis au tableau 1. Le revêtement est formé d'un empilage absorbant, d'une épaisseur de l'ordre de 75 nm constitué d'une couche composée essentiellement de TiN et d'une couche de SiC. Les propriétés sont mesurées avec la couche en position 1 (côté couche).

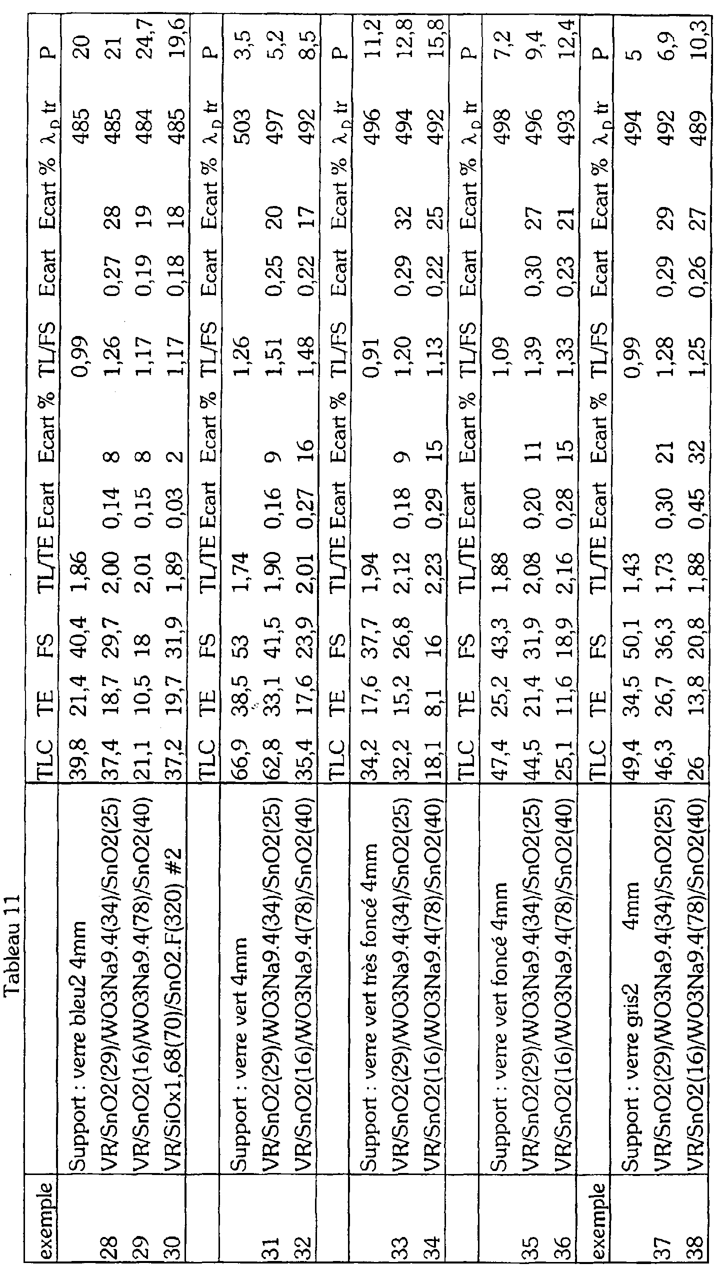

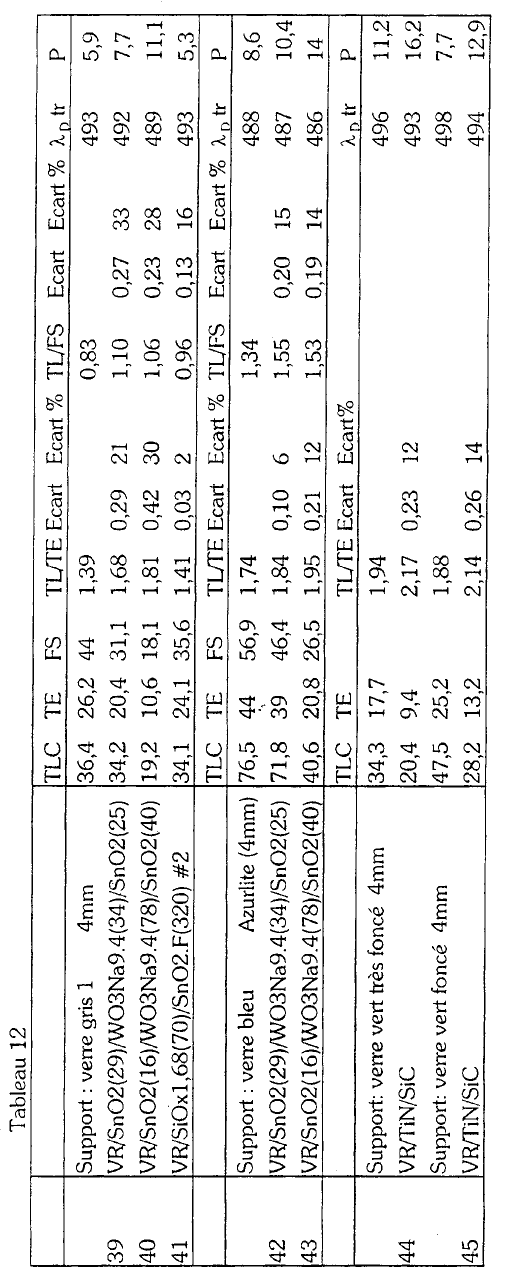

## Revendications

1. Vitrage comprenant:
- un substrat en verre coloré sodo-calcique composé de constituants principaux formateurs de verre et d'agents colorants, qui présente une sélectivité (TL/TE) d'au moins 1.1, mesurée avec l'illuminant C pour une épaisseur de verre de 4 mm,
- un revêtement déposé sur le substrat en verre coloré, qui procure au vitrage revêtu une sélectivité augmentée par rapport à la sélectivité du verre coloré non revêtu.

2. Vitrage selon la revendication 1, caractérisé en ce que la sélectivité du verre coloré non revêtu est d'au moins 1.3.

3. Vitrage selon la revendication 1 ou 2, caractérisé en ce que la sélectivité du verre coloré non revêtu est inférieure ou égale à 2.

4. Vitrage selon l'une des revendications 1 à 3, caractérisé en ce le verre coloré est un verre dont la transmission entre les longueurs d'onde 1000 et 1200 nm, pour une épaisseur de 4mm, est plus faible d'au moins 5 points (exprimés en %: rapport entre le rayonnement transmis et le rayonnement incident) par rapport à la transmission entre les longueurs d'onde 500 et 600 nm.

5. Vitrage selon l'une des revendications 1 à 4, caractérisé en ce que le verre coloré est un verre coloré gris foncé sodo-calcique composé de constituants principaux, formateurs de verre et d'agents colorants, dans lequel les éléments fer, sélénium, cobalt, chrome sont présents en tant qu'agents colorants, en quantité correspondant aux proportions suivantes (exprimées en pourcentage en poids du verre sous la forme indiquée)
Fe₂O₃ 0,75 à 1,8%
Co 0,0040 à 0,0180%
Se 0,0003 à 0,0040 %
Cr₂O₃ 0,0010 à 0,0100 %
et les proportions des agents colorants sont telles que le verre présente une transmission énergétique totale, mesurée pour une épaisseur de 4 mm (TE4) comprise entre 15 et 40%, une sélectivité (TLA/TE4) d'au moins 1,2 et une pureté d'excitation (P) ne dépassant pas 10%.

6. Vitrage selon l'une des revendications 1 à 4, caractérisé en ce que le verre coloré est un verre sodo-calcique coloré vert, qui comprend les pourcentages en poids en agents colorants suivants, la quantité totale de fer étant exprimée sous forme de Fe₂O₃:
Fe₂O₃ 0.7 à 1.3 %
FeO 0.18 à 0.27 %
Co 0 à 0.0040 %
V₂O₅ 0.0050 à 0.1 %,
et qui présente sous illuminant A et pour une épaisseur de verre de 4 mm, une transmission lumineuse (TLA4) comprise entre 40 et 70 %, une sélectivité (TLA/TE4) supérieure ou égale à 1.50.

7. Vitrage selon l'une des revendications 1 à 4, caractérisé en ce que le verre coloré est un verre vert-gris sodo-calcique composé de constituants principaux formateurs de verre et d'agents colorants, qui contient moins de 0,4% en poids de FeO, de 0.9 à 1.8% de Fe₂O₃, qui possède une pureté d'excitation de plus de 5% et présente sous illuminant A et pour une épaisseur de verre de 4 mm, une transmission lumineuse (TLA4) supérieure à 30%, une sélectivité (SE4) supérieure à 1,55 et une transmission du rayonnement ultraviolet (TUV4) inférieure à 10%.

8. Vitrage selon l'une des revendications 1 à 4, caractérisé en ce que le verre coloré est un verre sodo-calcique coloré composé de constituants principaux formateurs de verre et d'agents colorants, qui contient de 0.40 à 0.52 % en poids de FeO, présente sous illuminant A et pour une épaisseur de verre de 4 mm une transmission lumineuse (TLA4) inférieure à 70 %, une sélectivité (TLA/TE4) supérieure à 1.65 et une transmission du rayonnement ultraviolet (TUV4) inférieure à 8 %.

9. Vitrage selon l'une des revendications précédentes, caractérisé en ce que la sélectivité est augmentée d'au moins 3% par rapport à la sélectivité du verre coloré non revêtu.

10. Vitrage selon l'une des revendications précédentes, caractérisé en ce que la sélectivité est augmentée d'au moins 10% par rapport à la sélectivité du verre coloré non revêtu.

11. Vitrage selon l'une des revendications précédentes, caractérisé en ce que le revêtement est un revêtement déposé par pyrolyse.

12. Vitrage selon l'une des revendications précédentes, caractérisé en ce que le revêtement est tel que sa transmission, entre les longueurs d'onde 500 et 600 nm, sur verre clair d'épaisseur 4mm est plus élevée d'au moins 3 points (exprimés en pourcent: rapport entre le rayonnement transmis et le rayonnement incident) par rapport à la transmission entre les longueurs d'onde 1000 et 1200 nm.

13. Vitrage selon l'une des revendications précédentes, caractérisé en ce que le revêtement est choisi parmi les suivants:
- revêtement d'oxyde déposé par pyrolyse contenant de l'étain et de l'antimoine dans un rapport molaire compris entre 0.01 et 0.5
- revêtement déposé par pyrolyse comprenant une couche conductrice ou semi-conductrice d'épaisseur 15 à 500 nm formée d'un matériau comprenant un oxyde métallique contenant un dopant en un rapport de 5 à 100 moles par 100 moles d'oxyde métallique, l'oxyde métallique étant sélectionné parmi un ou plusieurs des suivants: oxyde de tungstène (WO3), trioxyde de molybdène (MoO₃), pentoxide de niobium (Nb₂O₅), pentoxyde de tantale (Ta₂O₅), pentoxyde de vanadium (V₂O₅) et dioxyde de vanadium (VO₂)
- revêtement déposé par pyrolyse qui comprend un empilage interférentiel antireflet comprenant depuis le verre un empilage de matériaux d'indice de réfraction alternativement haut et bas
- revêtement qui comprend une couche dont l'émissivité est inférieure à 0.3, en particulier une couche déposée par pyrolyse à base d'oxyde d'étain dopé au fluor.

14. Vitrage selon la revendication 13, caractérisé en ce que le revêtement comprend une sous-couche entre le substrat et le revêtement déposé par pyrolyse.

15. Vitrage selon la revendication 13 ou 14, caractérisé en ce que le revêtement d'oxyde, qui est de préférence déposé par pyrolyse en phase vapeur, confient de l'étain et de l'antimoine dans un rapport molaire compris entre 0.04 et 0.16.

16. Vitrage selon l'une des revendications 13 à 15, caractérisé en ce que le revêtement est un revêtement d'oxyde déposé par pyrolyse, qui confient de l'étain et de l'antimoine dans un rapport molaire compris entre 0.01 et 0.5, et son épaisseur est comprise entre 250 et 500nm.

17. Vitrage selon l'une des revendications précédentes, caractérisé en ce que le substrat revêtu est bombé et/ou traité thermiquement, en particulier recuit ou trempé.

18. Vitrage selon l'une des revendications précédentes, caractérisé en ce que le facteur de réflexion lumineuse (RL) est inférieur à 13%.

19. Vitrage selon l'une des revendications précédentes, caractérisé en ce que l'émissivité est inférieure à 0.2.

20. Vitrage selon l'une des revendications précédentes, caractérisé en ce que la sélectivité du substrat revêtu est supérieure à 2.

21. Vitrage selon l'une des revendications précédentes, caractérisé en ce que la longueur d'onde dominante en transmission dans le spectre visible du substrat revêtu est inférieure à la longueur d'onde dominante en transmission du substrat non revêtu.

22. Vitrage selon l'une des revendications précédentes, caractérisé en ce que la longueur d'onde dominante en transmission dans le spectre visible du substrat revêtu se situe entre 470 et 500 nm et la pureté est inférieure à 20%.

23. Utilisation du vitrage selon l'une des revendications précédentes en tant que vitrage pour véhicule du type automobile ou train.
